# EUROPÄISCHE PATENTSCHRIFT

(11) **EP 4 137 641 B1**
(45) Veröffentlichungstag und Bekanntmachung des Hinweises auf die Patenterteilung: **07.01.2026**
(21) Anmeldenummer: 22190502.9
(22) Anmeldetag: 16.08.2022
(51) Int. Cl.: E02F 9/08, E02F 9/20, H02K 9/19, B60K 1/00

(54) **ARBEITSMASCHINE**
WORK MACHINE
MACHINE DE TRAVAIL

(30) Priorität: 18.08.2021 DE 102021121455; 03.09.2021 DE 102021122820
(43) Veröffentlichungstag der Anmeldung: 22.02.2023
(73) Patentinhaber: Liebherr-Werk Bischofshofen GmbH, 5500 Bischofshofen (AT)
(72) Erfinder: Knapp, Hans, 5500 Bischofshofen (AT); ZOBL-RICHTER, Hendrik, 5020 Salzburg (AT); Kiegerl, Christoph, 5453 Werfenweng (AT); WINDHOFER, Reinhard, 5505 Mühlbach am Hochkönig (AT); HOFBAUER, Johannes, 5301 Eugendorf (AT)
(74) Vertreter: Lorenz Seidler Gossel Part. mbB

(56) Entgegenhaltungen:
- DE-A1- 102008 034 175
- DE-A1- 102012 112 377
- DE-A1- 102018 211 360

## Beschreibung

Die vorliegende Erfindung betrifft eine Arbeitsmaschine, insbesondere einen Radlader, mit einem Elektromotor sowie mit einer Ölkühlung, die geeignet und bestimmt ist, den Elektromotor zu kühlen, sowie mit einer Fahrachse, die über ein Ölreservoir verfügt.

Vorzugsweise handelt es sich bei der Arbeitsmaschine um ein elektrisch angetriebenes Fahrzeug, d.h. über eine mobile Arbeitsmaschine, die auch oder ausschließlich mittels eines Elektromotors angetrieben wird. Darunter fallen reine Elektrofahrzeuge sowie Hybridfahrzeuge, die außer dem Elektromotor noch über einen weiteren Antrieb, wie einen Verbrennungsmotor verfügen.

Aus dem Stand der Technik ist es bekannt, Elektromotoren mit großem Leistungsbedarf mittels einer Flüssigkeit, insbesondere mit Öl, zu kühlen, da eine Luftkühlung häufig nicht ausreichend ist. Die Ölkühlung wird üblicherweise mittels eines zusätzlichen Kühlkreislaufes inclusive Ölreservoir, Pumpe, Filter und Motor zum Antrieb der Pumpe erzielt.

Die DE 10 2012 112 377 A1 offenbart dabei eine Antriebsachse für eine mobile Arbeitsmaschine, bei der sowohl ein Elektromotor wie auch ein Getriebe sich einen gemeinsamen Kühlmittelkreislauf teilen.

Der vorliegenden Erfindung liegt die Aufgabe zugrunde, eine Arbeitsmaschine der eingangs genannten Art dahingehend weiterzubilden, dass diese einen möglichst einfachen Aufbau aufweist.

Diese Aufgabe wird durch eine Arbeitsmaschine mit den Merkmalen des Anspruchs 1 gelöst.

Danach ist vorgesehen, dass eine Zuführleitung von dem genannten Ölreservoir zu dem Elektromotor und eine Abführleitung von dem Elektromotor zu dem genannten Ölreservoir sowie eine Pumpe vorhanden ist, um Öl von dem Ölreservoir zu dem Elektromotor zu pumpen, so dass der Elektromotor mittels Öl aus dem Ölreservoir der Fahrachse gekühlt wird.

Unter einer Fahrachse wird im Rahmen der vorliegenden Erfindung eine Achse verstanden, an denen die Räder oder dergleichen zur Fortbewegung der Arbeitsmaschine angeordnet sind.

Der vorliegenden Erfindung liegt somit der Gedanke zugrunde, den Elektromotor nicht mit einem eigenen Ölhaushalt zu versorgen bzw. zu kühlen, sondern das Achsöl zu verwenden, das ohnehin vorhanden ist.

Somit kann auf ein eigens für den Elektromotor bestimmtes Kühlsystem incl. eigenem Öltank verzichtet werden, was zu einer entsprechenden Vereinfachung im Aufbau führt. Das Ölreservoir zur Kühlung des Elektromotors wird erfindungsgemäß durch das Ölreservoir der Fahrachse gebildet. Bei der Fahrachse kann es sich beispielsweise um die Vorder- oder Hinterachse der Arbeitsmaschine handeln.

Mittels der Zuführleitung wird Öl von der Fahrachse bzw. von dem Öltank der Fahrachse zu dem Elektromotor geführt. Mittels der Rückführleitung wird Öl von dem Elektromotor zurück zu der Fahrachse bzw. zu dem Öltank der Fahrachse geführt.

Zur Förderung des Öls von und zu dem Elektromotor ist die Pumpe vorzugsweise in der Zuführleitung oder in der Abführleitung angeordnet, so dass sich der Elektromotor auf der Druck- bzw. Saugseite der Pumpe befindet.

In einer weiteren Ausgestaltung der Erfindung ist in der Zuführleitung oder in der Abführleitung ein Filter zur Ölfilterung angeordnet, der vorzugsweise mit einer Bypassleitung mit Ventil versehen ist.

Weiterhin kann in der Zuführleitung oder in der Abführleitung ein Wärmetauscher angeordnet sein. Dieser dient zur Kühlung des Öls, bevor dieses in den Elektromotor gelangt.

In einer Weiterbildung der Erfindung kann ein eigenständiger Pumpenantrieb mit Motorkühlung in Form eines Ventilators vorhanden sein, wobei der Wärmetauscher derart angeordnet ist, dass sich dieser im Luftstrom des Ventilators befindet.

Zur Kühlung des Öls ist somit vorzugsweise ein Wärmetauscher vorgesehen, der sich vorzugsweise in dem Luftstrom der Kühlung eines eigenständigen, elektrisch angetriebenen Pumpenantriebes befindet. Diese eigenständige Pumpe kann zur Versorgung von hydraulischen Verbrauchern der Arbeitsmaschine dienen.

In einer weiteren Ausgestaltung der Erfindung ist zum Druckausgleich zwischen der Fahrachse und dem Elektromotor eine Entlüftungsleitung zur Atmosphäre hin vorhanden.

In einer bevorzugten Ausgestaltung der Erfindung ist der Elektromotor der Antriebsmotor der Arbeitsmaschine. Somit handelt es sich bei der Arbeitsmaschine vorzugsweise um eine Arbeitsmaschine die ausschließlich oder auch durch den Elektromotor angetrieben wird.

Denkbar ist es auch, dass der Elektromotor zum Antrieb eines Arbeitswerkzeuges oder einer sonstigen Hydraulikeinheit der Arbeitsmaschine dient.

Nach der Erfindung verfügt die Arbeitsmaschine über ein Getriebe mit einem Ölkreislauf, wobei dieser Ölkreislauf nicht mit der Ölkühlung des Elektromotors verbunden ist, d.h. dieser Getriebeölkreislauf wird vorzugsweise nicht zur Kühlung des Elektromotors verwendet.

Besonders bevorzugt ist es, wenn außer der Kühlung des Elektromotors mittels des Öls aus dem Ölreservoir der Fahrachse kein weiterer Kühlkreislauf bzw. keine sonstige Kühleinrichtung zur Kühlung des Elektromotors vorhanden ist. In diesem Fall erfolgt die Kühlung des Elektromotors ausschließlich mittels Öl, das aus der Fahrachse bzw. dem Ölreservoir der Fahrachse stammt.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

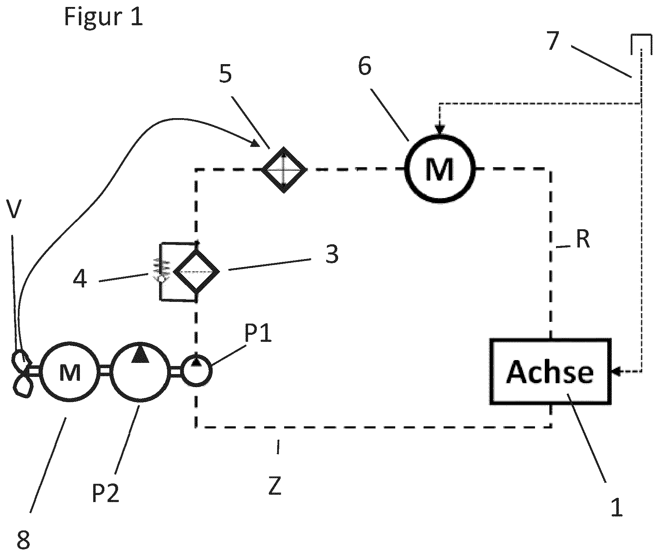

Weitere Einzelheiten und Vorteile der Erfindung werden anhand eines in der Zeichnung dargestellten Ausführungsbeispiels näher erläutert.

Die einzige Figur zeigt eine schematische Ansicht eines Kühlkreislaufes zur Kühlung des Elektromotors eines Radladers oder einer sonstigen vorzugsweise mobilen Arbeitsmaschine.

Mit dem Bezugszeichen 1 ist die Fahrachse der Arbeitsmaschine bzw. das der Fahrachse zugeordnete Ölreservoir gekennzeichnet.

Von dieser erstreckt sich die Zuführleitung Z bis zu dem Elektromotor 6, der zu kühlen ist.

Von dem Elektromotor 6 zurück zu der Fahrachse bzw. zu deren Ölreservoir erstreckt sich die Rückführleitung R.

Somit existiert ein Kühlkreislauf für den Elektromotor 6, der allerdings kein eigens dem Elektromotor 6 zugewiesenes Ölreservoir aufweist, sondern das Ölreservoir der Fahrachse 1 nutzt.

In der Zuführleitung Z befindet sich die Pumpe P1 zur Förderung des Öls durch den Kühlkreislauf.

Diese Pumpe P1 saugt aus dem Differentialgehäuse einen geringen Teil des Öls und fördert dieses zu dem Elektromotor 6.

Diese Pumpe P1 und eine weitere eigenständige Pumpe P2, die zur Versorgung von Hydraulikverbrauchern der Arbeitsmaschine dient, werden durch den gemeinsamem Motor 8 angetrieben.

Der Motor 8 verfügt über eine Luftkühlung in Form des Ventilators V.

Stromabwärts der Pumpe P1 befindet sich in der Zuführleitung Z der Filter 3.

Wie aus der Figur weiter ersichtlich, erstreckt sich um den Filter 3 eine Bypassleitung mit einem federbelasteten Ventil 4, das bei hinreichendem Druck, d.h. bei Überschreitung eines Druckgrenzwertes nur in Strömungsrichtung, d.h. von der Pumpe P1 hin zu dem Elektromotor 6 öffnet, in der Gegenrichtung jedoch nicht.

Weiter stromabwärts befindet sich der Wärmetauscher 5 zur Kühlung des dem Elektromotor 6 zuströmenden Öls.

Die Kühlung erfolgt mittels des Ventilators V.

Stromabwärts des Wärmetauschers 5 ist der Elektromotor 6 angeordnet, der beispielsweise den Fahrantrieb des Radladers oder einer sonstigen Arbeitsmaschine bildet.

Von dem Elektromotor 6 zurück zur Fahrachse bzw. zu deren Ölreservoir erstreckt sich die Rückführleitung R, so dass hinsichtlich der Ölkühlung des Elektromotors 6 ein geschlossener Öl- bzw. Kühlkreislauf existiert.

Im Unterschied zu bekannten Ausführungen weist dieser Kühlkreislauf jedoch kein eigenes Ölreservoir auf, das nur zur Kühlung des Elektromotors 6 dient. Vielmehr dient als Ölreservoir zur Kühlung des Elektromotors 6 das ohnehin vorhandene Ölreservoir der Fahrachse 1.

Somit wird der Aufbau der Kühlung des Elektromotors gegenüber bekannten Ausführungen entsprechend vereinfacht.

Zur Angleichung des Druckniveaus zwischen der Fahrachse 1 und dem Elektromotor 6 wird die Fahrachse gemeinsam mit dem Motor über die Leitung 7 zur Atmosphäre hin entlüftet.

Bevorzugte Aspekte der Erfindung werden im Folgenden beschrieben:
- Mobile Arbeitsmaschine mit ölgekühltem Elektromotor, bei der für die Elektromotorkühlung der Achsölhaushalt genutzt wird, mit dem Vorteil, dass auf einen separaten, kostentreibenden Öltank verzichtet werden kann, und der oftmals sensible Ölhaushalt eines Getriebes unangetastet bleiben kann.
- Kühlkreislauf-Umwälzpumpe(n) für die Kühlung von Fahrmotor(en) und Pumpenmotor(en), wobei eine oder mehrere Umwälzpumpen durch den mindestens einen vom Fahrantrieb unabhängigen Pumpenantrieb der Hydraulikverbraucher mitangetrieben werden.
- Kühlkreislauf-Umwälzpumpe(n) mit konstantem oder variablem Schluckvolumen.
- Kühlkreislauf mit gemeinsamer Umwälzpumpe für das gemeinsame Versorgen mehrerer Antriebe.
- Kühlkreislauf mit separater Kühlreislauf-Umwälzpumpe für jeden elektrischen Antrieb, insbesondere Fahrmotor(en) und Pumpenmotor(en).
- Verwendung eines Wärmetauschers, der vorzugsweise im Luftstrom des Ventilators des eigenständigen, elektrisch angetriebenen Pumpenantriebes steht
- Verwendung eines Ölfilters
- Zur Schutz des Elektromotors vor verschmutzten Filtern wird ein Bypass-Ventil vorgesehen
- Nutzung der bestehenden Ölablass- und Nachfüllschrauben der Fahrachse für Kühlölansaugung und -rücklauf der Elektromotorkühlung
- Entlüftung der Fahrachse über die Entlüftung des Motors

## Patentansprüche

1. Arbeitsmaschine, insbesondere Radlader, mit
einem Elektromotor (6),
einer Ölkühlung (Z, R), die geeignet und bestimmt ist, den Elektromotor (6) zu kühlen,
einer Fahrachse (1), die über ein Ölreservoir verfügt,
einer Zuführleitung (Z) von dem genannten Ölreservoir zu dem Elektromotor (6),
einer Abführleitung (R) von dem Elektromotor (6) zu dem genannten Ölreservoir, sowie einer Pumpe (P1), um Öl von dem Ölreservoir zu dem Elektromotor (6) zu pumpen, so dass der Elektromotor (6) mittels Öl aus dem Ölreservoir der Fahrachse (1) gekühlt wird,
**dadurch gekennzeichnet, dass**
die Arbeitsmaschine über ein Getriebe mit einem Ölkreislauf verfügt, der nicht mit der Ölkühlung (Z, R) des Elektromotors (6) verbunden ist.

2. Arbeitsmaschine nach Anspruch 1, **dadurch gekennzeichnet, dass** die Pumpe (P1) in der Zuführleitung (Z) oder in der Abführleitung (R) angeordnet ist.

3. Arbeitsmaschine nach Anspruch 1 oder 2, **dadurch gekennzeichnet, dass** in der Zuführleitung (Z) oder in der Abführleitung (R) ein Filter (3) angeordnet ist, der vorzugsweise mit einer Bypassleitung (4) mit Ventil versehen ist.

4. Arbeitsmaschine nach einem der vorhergehenden Ansprüche, **dadurch gekennzeichnet, dass** in der Zuführleitung (Z) oder in der Abführleitung (R) ein Wärmetauscher (5) angeordnet ist.

5. Arbeitsmaschine nach Anspruch 4, **dadurch gekennzeichnet, dass** ein eigenständiger Pumpenantrieb (8) mit Motorkühlung in Form eines Ventilators (V) vorhanden ist und dass der Wärmetauscher (5) derart angeordnet ist, dass sich dieser im Luftstrom des Ventilators (V) befindet.

6. Arbeitsmaschine nach einem der vorhergehenden Ansprüche, **dadurch gekennzeichnet, dass** zum Druckausgleich zwischen der Fahrachse (1) und dem Elektromotor (6) eine Entlüftungsleitung gegen die Atmosphäre vorhanden ist.

7. Arbeitsmaschine nach einem der vorhergehenden Ansprüche, **dadurch gekennzeichnet, dass** der Elektromotor (6) den Antriebsmotor der Arbeitsmaschine bildet.

8. Arbeitsmaschine nach einem der vorhergehenden Ansprüche, **dadurch gekennzeichnet, dass** der Elektromotor (6) zum Antrieb eines Arbeitswerkzeuges oder einer sonstigen Hydraulikeinheit der Arbeitsmaschine dient.

9. Arbeitsmaschine nach einem der vorhergehenden Ansprüche, **dadurch gekennzeichnet, dass** außer der Kühlung des Elektromotors (6) mittels des Öls aus dem Ölreservoir der Fahrachse (1) kein weiterer Kühlkreislauf oder sonstige Kühleinrichtung zur Kühlung des Elektromotors (6) vorhanden ist.

## Claims

1. A work machine, in particular a wheeled loader, comprising an electric motor (6),
an oil cooling (Z, R) suitable and intended to cool the electric motor (6),
a driving axle (1) having an oil reservoir,
a feed line (Z) connecting said oil reservoir to the electric motor (6),
a discharge line (R) from the electric motor (6) to said oil reservoir, and a pump (P1) for pumping oil from the oil reservoir to the electric motor (6), such that the electric motor (6) is cooled by means of the oil originating from the oil reservoir of the driving axle (1),
**characterized in that**
the work machine has, by way of a transmission, an oil circuit that is not connected to the oil cooling (Z, R) of the electric motor (6).

2. The work machine according to claim 1, **characterized in that** the pump (P1) is arranged in the feed line (Z) or in the discharge line (R).

3. The work machine according to claim 1 or 2, **characterized in that** a filter (3) is arranged in the feed line (Z) or in the discharge line (R), which is preferably provided with a bypass line (4) having a valve.

4. The work machine according to any one of the preceding claims, **characterized in that** a heat exchanger (5) is arranged in the feed line (Z) or in the discharge line (R).

5. The work machine according to claim 4, **characterized in that** an independent pump drive (8) having a motor cooling in the form of a fan (V) is present and **in that** the heat exchanger (5) is arranged such that it lies in the airflow of the fan (V).

6. The work machine according to any one of the preceding claims, **characterized in that** a venting line to the atmosphere is present for pressure equalization between the driving axle (1) and the electric motor (6).

7. The work machine according to any one of the preceding claims, **characterized in that** the electric motor (6) forms the drive motor of the work machine.

8. The work machine according to any one of the preceding claims, **characterized in that** the electric motor (6) serves to drive a work tool or another hydraulic unit of the work machine.

9. The work machine according to any one of the preceding claims, **characterized in that**, apart from the cooling of the electric motor (6) by means of the oil originating from the oil reservoir of the driving axle (1), no additional cooling circuit or other cooling device for cooling the electric motor (6) is present.

## Revendications

1. Machine de travail, notamment chargeur sur roues, comprenant
un moteur électrique (6),
un refroidissement à huile (Z, R) adapté et destiné à refroidir le moteur électrique (6),
un essieu moteur (1) disposant d'un réservoir d'huile,
une conduite d'alimentation (Z) reliant ledit réservoir d'huile au moteur électrique (6),
une conduite d'évacuation (R) du moteur électrique (6) vers ledit réservoir d'huile, ainsi qu'une pompe (P1) pour pomper de l'huile du réservoir d'huile vers le moteur électrique (6), de telle sorte que le moteur électrique (6) est refroidi au moyen de l'huile provenant du réservoir d'huile de l'essieu moteur (1),
**caractérisée en ce que**
la machine de travail dispose, par l'intermédiaire d'une transmission, d'un circuit d'huile qui n'est pas relié au refroidissement à huile (Z, R) du moteur électrique (6).

2. Machine de travail selon la revendication 1, **caractérisée en ce que** la pompe (P1) est agencée dans la conduite d'alimentation (Z) ou dans la conduite d'évacuation (R).

3. Machine de travail selon la revendication 1 ou 2, **caractérisée en ce qu'**un filtre (3) est agencé dans la conduite d'alimentation (Z) ou dans la conduite d'évacuation (R), lequel est de préférence muni d'une conduite de dérivation (4) avec soupape.

4. Machine de travail selon l'une quelconque des revendications précédentes, **caractérisée en ce qu'**un échangeur de chaleur (5) est agencé dans la conduite d'alimentation (Z) ou dans la conduite d'évacuation (R).

5. Machine de travail selon la revendication 4, **caractérisée en ce qu'**un entraînement de pompe indépendant (8) avec refroidissement du moteur sous la forme d'un ventilateur (V) est présent et **en ce que** l'échangeur de chaleur (5) est agencé de telle sorte que celui-ci se trouve dans le flux d'air du ventilateur (V).

6. Machine de travail selon l'une quelconque des revendications précédentes, **caractérisée en ce qu'**une conduite de purge d'air vers l'atmosphère est présente pour équilibrer la pression entre l'essieu moteur (1) et le moteur électrique (6).

7. Machine de travail selon l'une quelconque des revendications précédentes, **caractérisée en ce que** le moteur électrique (6) forme le moteur d'entraînement de la machine de travail.

8. Machine de travail selon l'une quelconque des revendications précédentes, **caractérisée en ce que** le moteur électrique (6) sert à entraîner un outil de travail ou une autre unité hydraulique de la machine de travail.

9. Machine de travail selon l'une quelconque des revendications précédentes, **caractérisée en ce qu'**à l'exception du refroidissement du moteur électrique (6) au moyen de l'huile provenant du réservoir d'huile de l'essieu moteur (1), aucun circuit de refroidissement supplémentaire ou autre dispositif de refroidissement pour refroidir le moteur électrique (6) n'est présent.
